# DEMANDE DE BREVET EUROPEEN

(11) **EP 2 299 196 A1**
(43) Date de publication de la demande: **23.03.2011**
(21) Numéro de dépôt: 10176254.0
(22) Date de dépôt: 10.09.2010
(51) Int. Cl.: F24F 5/00, F24H 3/04

(54) **Dispositif de ventilation d'un bâtiment de type puits canadien**

(30) Priorité: 11.09.2009 FR 0904337
(71) Demandeur: Sekrane, Gérard, 47000 Agen (FR)
(72) Inventeur: Sekrane, Gérard, 47000 Agen (FR)
(74) Mandataire: Gaillarde, Frédéric F. Ch.

(57) **Abrégé**

L'invention concerne un dispositif de ventilation (10) d'un bâtiment (1) comprenant un système de prélèvement d'air destiné à être ventilé à l'intérieur dudit bâtiment (1), ledit système comprenant au moins une conduite d'amenée d'air (30) ventilé vers ledit bâtiment (1) **caractérisé en ce que** ladite conduite d'amenée d'air (30) ventilé est équipée d'au moins un élément de chauffage (50) de l'air circulant au sein de ladite conduite (30), ledit élément de chauffage étant un ruban chauffant, une cartouche chauffante ou un câble chauffant.

## Description

L'invention concerne les installations de ventilation d'un bâtiment.

Par installation de ventilation, on entend tout dispositif destiné à assurer le renouvellement de l'air à l'intérieur du batiment, ceci notamment afin de réguler la température interne du bâtiment et/ou de lutter, notamment, contre les pollutions internes.

Elle concerne, plus précisément mais non exclusivement, les installations de ventilation équipées d'échangeurs géothermiques de type puits canadien.

Les installations de ventilation sont des sources de déperditions de chaleur et de consommation énergetique importante, de part, notamment, les systèmes de chauffage auxquels elles doivent être associées.

L'échangeur géothermique de type puits canadien répond au besoin de diminuer les dépenses en énergie du batiment munie d'une installation de ventilation.

Le puits canadien est un système qui consiste à prétraiter l'air de renouvellement entrant dans le bâtiment en le faisant circuler, auparavant, dans un collecteur enterré pour le refroidir ou le préchauffer, en utilisant le principe d'inertie thermique du sous sol.

L'inertie thermique du sous sol résulte de certaines particularités du sous-sol selon lesquelles, notamment, la température sous terre est différente de celle en surface et sa variation est déphasée dans le temps par rapport à celle en surface.

D'autres particularités telles qu'une variation de température de faible amplitude au fur et à mesure que la profondeur augmente et une température considérée comme hors gel dès quelques dizaines de centimètres de profondeur assurent l'inertie thermique du sous sol.

Ainsi, le collecteur enterré à une certaine profondeur peut servir d'échangeur thermique entre l'air ventilé et le sous sol, l'air étant le fluide caloporteur.

Le collecteur est à l'abri du gel et ne subit pas les variations de température de la surface.

En mode chauffage, les calories du sous sol sont extraites pour préchauffer l'air extérieur de renouvellement circulant dans le collecteur avant qu'il soit ventilé et distribué dans le batiment.

Ce préchauffage de l'air ventilé permet de réduire les besoins de chauffage lié à l'installation de ventilation et, par conséquent, de diminuer les dépenses d'énergie.

Cependant, on constate que ces installations de ventilation ne sont pas entièrement satisfaisantes d'un point de vue énergétique, surtout si l'on veut obtenir des batiments à faible consommation énergétique.

En effet, il arrive que le gain d'énergie résultant de l'utilisation du puits canadien soit peu significatif.

Il est connu que le rendement de l'échange thermique entre l'air et le sous-sol est proportionnel à la profondeur d'enfouissement et à la longueur du collecteur du puits canadien.

Or, les limites imposées pour le choix de la longueur du collecteur et ces possibilités d'enfouissement par le terrain dans lequel est installé le puits canadien aboutissent à des installations de ventilation qui n'assurent pas à elles seules l'intégralité des besoins de chauffage par des températures extérieures très basses.

Elles nécessitent des systèmes de chauffage d'appoint, ce qui compromet leur rendement énergétique.

De plus, une longueur de collecteur importante augmente les charges en ligne et influe directement sur la puissance nécessaire à la ventilation de l'installation, compromettant également son rendement énergétique.

Il est, ainsi, nécessaire d'optimiser toute installation de ventilation pour en réduire les dépenses énergetiques.

Un but de la présente invention est de pallier les problèmes définis ci-dessus.

Plus précisément, un but de la présente invention est de proposer une installation de ventilation dont les dépenses énergétiques sont maîtrisées et réduites.

Un autre but de la présente invention est d'améliorer les performances de telles installations de ventilation.

Il est également désirable d'offrir une installation de ventilation qui s'affranchit des systèmes de chauffage d'appoint.

Enfin, un autre but de la présente invention est de proposer une installation de ventilation simple à mettre en oeuvre offrant la possibilité d'être installée sur un terrain de surface limitée.

A cet effet, l'invention propose un dispositif de ventilation d'un bâtiment comprenant un système de prélèvement d'air destiné à être ventilé à l'intérieur dudit bâtiment, ledit système comprenant au moins une conduite d'amenée d'air ventilé vers ledit bâtiment, **caractérisé en ce que** ladite conduite d'amenée d'air ventilé est équipée d'au moins un élément de chauffage de l'air circulant au sein de ladite conduite.

Grâce à la présente invention, les dépenses énergétiques liées au dispositif de ventilation chauffante sont réduites, puisqu'il n'est plus nécessaire d'utiliser un chauffage d'appoint, l'air étant chauffé préalablement à son entrée dans le bâtiment, ce qui est plus rentable énergiquement que de chauffer la masse d'air statiquement.

De plus, les températures de confort du bâtiment sont atteintes en s'affranchissant de tout système de chauffage d'appoint autre que le dispositif de ventilation.

Selon des modes particuliers de réalisation de l'invention, le dispositif peut comprendre une ou plusieurs des caractéristiques suivantes, prises isolément ou en combinaison techniquement possibles :
- l'élément de chauffage est un ruban chauffant, une cartouche chauffante ou un câble chauffant ;
- l'élément de chauffage est placé à l'intérieur et/ou à l'extérieur de la conduite d'amenée d'air ventilé ;
- le ruban de chauffage comprend au moins une ou plusieurs pistes électriquement conductrices déposées entre deux couches de protection ;
- le ruban de chauffage est souple, semi rigide ou rigide ;
- le ruban de chauffage est conformé sous forme de spirale selon l'axe de la conduite d'amenée d'air ventilé ;
- le ruban de chauffage est conformé sous forme d'une plaque disposée contre la conduite d'amenée d'air ventilé ;
- le ruban de chauffage est conformé sous forme d'une plaque disposée selon la section de la conduite d'amenée d'air ventilé et percée de passages traversant pour le passage de l'air circulant au sein de ladite conduite ;
- le câble chauffant est fixé entre deux plaques adaptées pour accumuler de la chaleur ;
- l'ensemble câble chauffant / plaques est monté de façon rotative dans la conduite d'amenée d'air ;
- l'élément de chauffage est amovible ;
- le dispositif comprend un accumulateur et/ou une source d'énergie renouvelable pour alimenter l'élément de chauffage en énergie électrique ;
- la conduite d'amenée d'air ventilé appartient à une ventilation mécaniquement contrôlée à simple ou double flux ou à un échangeur géothermique ou à une ventilation mécaniquement contrôlée couplée à un échangeur géothermique ;
   - la conduite d'amenée d'air ventilé appartient à un bâtiment avicole ;
   - l'échangeur géothermique est un puits canadien.

D'autres caractéristiques, but et avantages de la présente invention, apparaîtront à la lecture de la description détaillée qui va suivre, selon des modes de réalisation donnés à titre d'exemples non limitatifs, et en référence aux dessins annexés sur lesquels :
- la figure 1 est une représentation schématique d'une installation de ventilation selon un premier mode de réalisation de la présente invention ;
- la figure 2 est une illustration d'un ruban de chauffage placé dans l'installation de ventilation de la figure 1 ;
- les figures 3 à 5 sont des illustrations de trois variantes de réalisation du ruban de chauffage illustré sur la figure 2 ;
- les figures 6 et 8 sont des représentations schématiques partielles d'une installation de ventilation selon un second mode de réalisation de la présente invention ;
- la figure 7 est une vue en coupe d'un câble chauffant placé dans l'installation de ventilation des figures 6 et 8.

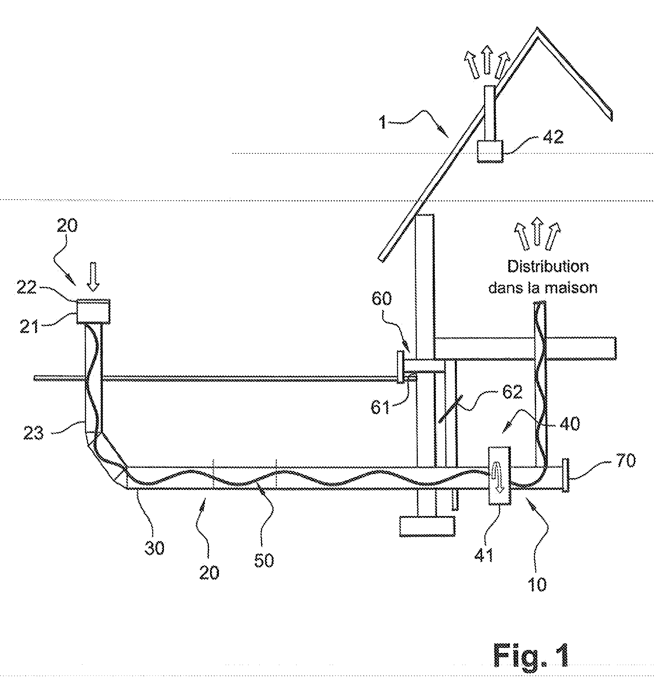

Sur la figure 1, on observe un bâtiment 1 équipé d'une installation de ventilation 10 destinée à assurer le renouvellement de l'air à l'intérieur du bâtiment 1, afin de réguler la température interne du bâtiment, notamment.

Dans un mode de réalisation de la présente invention, l'installation de ventilation 10 comprend un échangeur géothermique 20 du type puits canadien qui permet de prétraiter l'air extérieur destiné à être ventilé dans le bâtiment 1 en le réchauffant ou en le refroidissant, avant qu'il soit distribué par des moyens adaptés dans le volume du bâtiment 1.

L'installation de ventilation 10 comprend un système de prélèvement d'air comprenant une entrée d'air 20 par laquelle l'air extérieur destiné à être ventilé est prélevé, ainsi qu'au moins une conduite d'amenée d'air ventilé 30 enterrée à une certaine profondeur du sol.

Cette conduite d'amenée d'air 30 assure le rôle d'échangeur géothermique entre l'air extérieur aspiré et le sous sol.

La conduite d'amenée d'air 30 est reliée, à sa sortie, à un système de ventilation 40 de façon à ventiler dans le volume habitable du bâtiment 1 l'air prélevé à l'extérieur et préchauffé ou refroidi le long de la conduite 30.

Le système de ventilation 40 peut comprendre une aération naturelle ou un simple ventilateur 41 et/ou une ventilation mécaniquement contrôlée simple flux 42 ou double flux (non illustrée) en fonction des besoins énergétiques du bâtiment 1.

Concernant l'entrée d'air 20, elle comprend, plus précisément, une prise d'air 21 par laquelle l'air extérieur est aspiré à travers au moins un filtre 22 destiné à protéger l'entrée d'air 20 contre les nuisibles de type rongeurs, insectes ou encore pollen.

Un chapeau de protection (non illustré) peut être monté sur la prise d'air 21 de façon à éviter les infiltrations d'eau de pluie à l'intérieur de la conduite d'amenée d'air 30 du puits canadien 20.

L'air extérieur aspiré descend dans un regard 23 jusqu'à une profondeur déterminée, pour circuler, ensuite, dans la conduite d'amenée d'air 30.

De façon connue, la conduite d'amenée d'air 30 présente une pente comprise entre 1 et 3 %, de façon à favoriser l'évacuation de condensats qui peuvent se former lorsque l'air extérieur chaud prélevé est en contact avec les parois plus froides de la conduite d'amenée d'air 30.

Les risques de moisissures et d'humidité résiduelle sont ainsi évités.

De plus, la conduite d'amenée d'air 30 est placée, dans un exemple non limitatif de la présente invention, à une profondeur de l'ordre de 1 à 2 mètres.

A cette profondeur, la température varie peu et la conduite d'amenée d'air 30 est protégée contre le gel.

Cette conduite d'amenée d'air 30 est adaptée pour présenter une conductivité thermique élevée afin d'assurer l'échange thermique entre le sous sol et l'air prélevé circulant en son sein et une bonne tenue à l'enfouissement.

On peut citer, comme exemples non limitatifs, des conduites d'amenée d'air 30 formées en matériau PVC, polyéthylène ou polypropylène souple ou rigide.

Concernant le diamètre de la conduite d'amenée d'air 30, ce dernier est déterminé en fonction des débits d'air ventilé requis.

Il est à noter que la circulation de l'air extérieur prélevé dans la conduite d'amenée d'air 30 peut être assurée mécaniquement, tel que précité, grâce à un système de ventilation 40 adapté mais aussi passivement, par exemple, par une surpression à l'entrée de la conduite d'amenée d'air 30.

Selon l'invention, la conduite d'amenée d'air ventilé 30 est équipée d'au moins un élément de chauffage, destiné à chauffer l'air circulant au sein de la conduite 30 avant qu'il ne soit ventilé et distribué dans le volume habitable du bâtiment 1.

Dans le mode de réalisation illustré sur les figures, l'élément de chauffage est un ruban de chauffage 50.

Ce ruban de chauffage 50 peut être placé à l'intérieur ou à l'extérieur de la conduite d'amenée d'air ventilé 30.

Il peut être souple, semi rigide ou rigide.

De préférence, il est amovible, ceci afin de faciliter son remplacement si nécessaire.

Ainsi, dans des exemples non limitatifs de la présente invention, il peut être fixé sur un support amovible comprenant des éléments de glissement tels que des roulements.

Dans une variante de réalisation, le ruban de chauffage 50 est fixé par tout moyen de fixation adapté connu de l'homme du métier à la conduite d'amenée d'air. Ainsi, il peut être collé à la conduite 30.

Dans une autre variante de réalisation, il peut être monté sur une conduite de diamètre plus petit que la conduite d'amenée d'air 30, ladite conduite étant insérée dans la conduite d'amenée d'air par , par exemple, la trappe de regard 70 destinée à évacuer les condensats.

Grâce à un tel ruban de chauffage 50, en hiver, l'air prélevé de l'extérieur et circulant dans la conduite d'amenée d'air 30 du puits canadien 20 est réchauffé, d'une part, par échanges thermiques avec le sous sol, et, d'autre part, par le ruban de chauffage 50.

Ainsi, l'air ventilé et distribué à l'intérieur du bâtiment 1 peut atteindre une température de confort de l'ordre de 18-24°C sans nécessité de chauffage d'appoint couplé à l'installation de ventilation 10 de type convecteurs électriques ou encore chaudières.

Les propriétés du ruban de chauffage 50 conviennent, de façon surprenante, aux problèmes précédemment évoqués.

En effet, les dépenses énergétiques d'une telle installation 10 avec ruban de chauffage 50 sont moins importantes, pour un gain énergétique donné, que les dépenses énergétiques d'une installation de ventilation avec puits canadien associée à des moyens de chauffage d'appoint du bâtiment 1.

Le rendement de l'installation de ventilation selon la présente invention est meilleur.

Ainsi, pour une longueur et/ou une profondeur de conduite données, les performances du puits canadien sont améliorées.

On peut aussi envisager de réduire la longueur et/ou la profondeur de la conduite tout en conservant des performances énergétiques intéressantes, offrant la possibilité d'installer des installations de ventilation avec puits canadien, quelque soit le terrain sur lequel se trouve le bâtiment concerné.

Pour un gain énergétique donné, la réduction de la longueur de la conduite d'amenée d'air entraine une réduction des pertes de charge et, par conséquent, de la puissance de ventilation nécessaire.

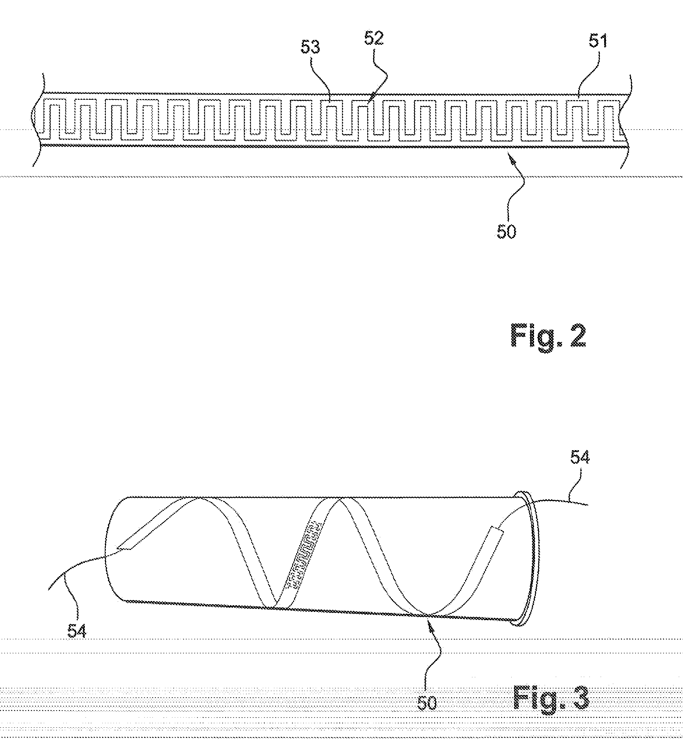

Tel qu'illustré sur la figure 2, le ruban de chauffage 50 peut comprendre au moins une couche superficielle de protection 51 sur laquelle est déposée une couche chauffante 52 alimentée électriquement par des moyens adaptés.

Le ruban de chauffage 50 peut être, dans un exemple non limitatif, un élément chauffant KAPTON® de la société Watlow.

Plus précisément, la ou les couches superficielles de protection 51 peuvent être formées, dans des exemples non limitatifs, en polyester, en fluorure de polyvinyle (Kevlar®) ou en polyimide (Kapton®).

Concernant la couche chauffante 52, elle peut comprendre un ou plusieurs films souples chauffants constitués d'un ou plusieurs rubans 53 métalliques mono-métal placés entre deux couches polymères reliées entre elles.

On peut citer, ainsi, comme exemples non limitatifs, des couches en polyester ou en polyéthylène.

Les pistes électriques rayonnantes que sont les rubans 53 métalliques mono-métal ont une forme et des dimensions adaptées par rapport à l'usage envisagé.

Ainsi, dans l'exemple non limitatif illustré sur la figure 2, les pistes 53 sont disposées en lacet le long du ruban 50, de façon à créer une répartition homogène de la chaleur le long du ruban de chauffage 50.

Dans une autre variante de réalisation de la présente invention, la couche chauffante 52 peut être intégrée dans une gaine d'élément composite.

Concernant l'étanchéité du ruban de chauffage 50, elle est assurée en soudant les couches superficielles de protection 51 entre elles ou en plaçant l'ensemble dans une gaine de protection.

Par ailleurs, les pistes électriques 53 de la couche chauffante 52 sont alimentées, par l'intermédiaire de fils de connexion 54 (voir figure 3 notamment), en basse (12 ou 24 V, typiquement) ou en haute tension à partir du réseau électrique classique, à partir d'un ou plusieurs accumulateurs ou à partir d'une source d'énergie renouvelable, tels que une ou plusieurs éoliennes ou un ou des panneaux solaires.

Les sources d'énergie renouvelable offrent l'avantage de réduire encore les dépenses énergétiques de l'installation de ventilation 10.

Dans une autre variante de réalisation de la présente invention, le ruban de chauffage 50 peut être un élément chauffant comprenant un polymère conducteur composite de type Fabroc® de la société Exo².

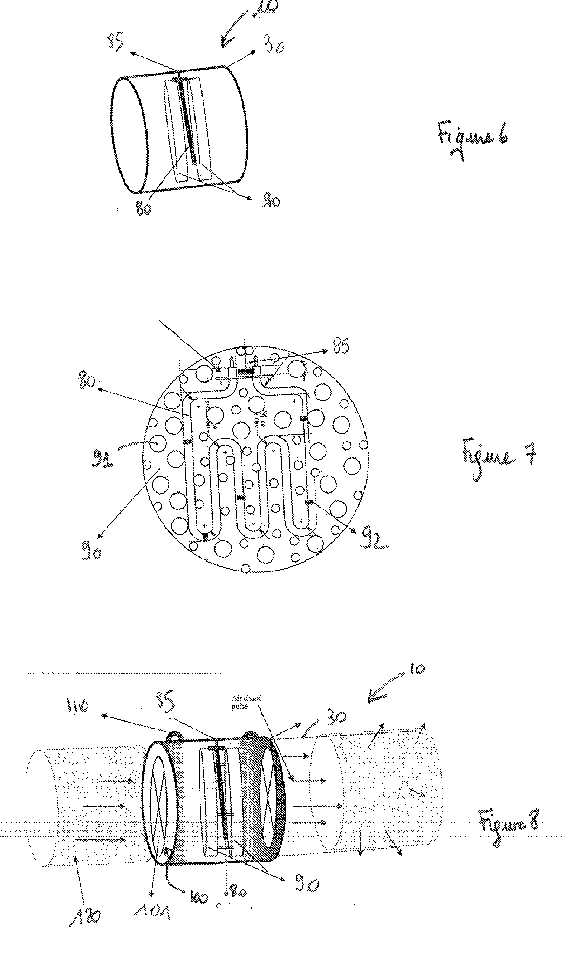

Dans d'autres modes de réalisation de la présente invention, l'élément de chauffage peut comprendre une ou plusieurs cartouches chauffantes ou câbles chauffants dont un mode de réalisation sera décrit plus loin en relation avec les figures 6 à 8.

On peut citer, comme exemples non limitatifs, les cartouches chauffantes des sociétés Watlow ou Ivaldi.

Dans une variante de réalisation de la présente invention, l'installation de ventilation 10 comprend des moyens de contrôle et de commande de la température de chauffage du ruban de chauffage 50 associés à des capteurs répartis en des endroits adaptés de la conduite d'amenée d'air 30 pour mesurer, par exemple, la température au sein de la conduite 30.

En référence aux figures 2 à 5, plusieurs variantes de réalisation de ruban de chauffage 50 peuvent être envisagées.

Ainsi, le ruban de chauffage 50 peut être conformé sous forme d'une spirale selon l'axe principal de la conduite d'amenée d'air 30.

Dans un exemple non limitatif illustré sur la figure 3, la spirale, placée contre les parois de la conduite d'amenée d'air 30 peut être déroulée le long de la conduite.

Une température homogène de l'air circulant peut ainsi être conservée tout au long de la conduite 30.

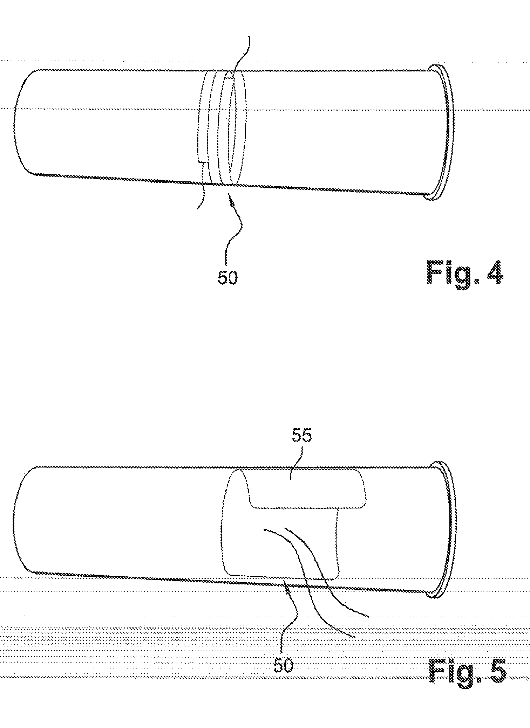

Dans un autre exemple non limitatif illustré sur la figure 4, cette spirale n'est pas déroulée et forme un anneau de forme complémentaire à celle de la paroi interne de la conduite 30, placé en un lieu adapté le long de cette dernière.

En référence à la figure 5, le ruban de chauffage 50 peut être conformé, également, sous forme d'une plaque 55 souple.

Cette plaque 55 peut, ainsi, être introduite dans la lumière de la conduite d'amenée d'air 30 ou disposée à l'extérieur contre la paroi de cette dernière et se conformer à sa forme.

Dans une autre variante de réalisation de la présente invention (non illustrée), le ruban de chauffage 50 est conformé sous forme d'une plaque transversale, disposée selon la section de la conduite d'amenée d'air 30 et percée de passages traversant destinés à permettre le passage du flux d'air ventilé circulant dans la conduite 30.

Il est à noter que d'autres variantes de réalisation peuvent être envisagées sans sortir du cadre de la présente invention.

Ainsi, dans des exemples non limitatifs, le ruban de chauffage 50 peut être constitué, également, de plusieurs spirales ou de plusieurs plaques réparties en des endroits adaptés le long de la conduite d'amenée d'air ventilé 30

Cela offre l'avantage de conserver une température homogène pour l'air circulant dans la conduite 30 tout le long de cette dernière jusqu'à la sortie.

En référence à la figure 1, l'installation de ventilation 10 peut comprendre des moyens 60 pour court-circuiter le puits canadien 20 lorsque ce dernier est contre-productif pour préchauffer/rafraîchir l'air au moment où les températures extérieures sont comprises dans la plage des températures de confort.

On prévoit, ainsi, une prise d'air extérieur 61 supplémentaire associée à une vanne 62 motorisé ou non pour prélever directement l'air à l'extérieur du bâtiment 1.

Ces moyens 60 permettent de choisir en permanence la température de l'air ventilé la plus favorable.

Par ailleurs, d'autres modes de réalisation de la présente invention peuvent être envisagées.

Ainsi, l'installation de ventilation 10 concernée par la présente invention peut être tout système de ventilation connu tel qu'une ventilation mécaniquement contrôlée à simple flux ou à double flux, couplée ou non à un puits canadien.

De telles ventilations mécaniquement contrôlées sont connues de l'Homme de l'art, et ne seront pas détaillées plus précisément par la suite.

En référence aux figures 6 et 8, dans un second mode de réalisation de la présente invention, on observe une conduite d'amenée d'air 30 d'une installation de ventilation 10 équipée d'au moins un câble chauffant 80 destiné à chauffer l'air circulant au sein de la conduite 30 avant qu'il ne soit ventilé et distribué dans le volume d'un bâtiment.

Ce câble chauffant 80 est inséré entre deux plaques 90 adaptées pour accumuler la chaleur tout en économisant la consommation électrique.

Ces deux plaques 90 qui emmagasinent la chaleur sont circulaires et perforées d'orifices 91 de dimensions différentes ou non sur toute ou une partie de leur surface, comme illustré sur la figure 7.

On peut ainsi maîtriser la surface de transfert de chaleur en l'augmentant, si nécessaire.

De préférence, les deux plaques 90 sont en fonte et/ ou en inox.

Le câble chauffant 80 est fixé à des endroits appropriés sur les deux plaques 80 par des moyens de fixation 92 adaptés, comme illustré sur la figure 7.

Par ailleurs, le câble chauffant 80 est fixé par tout moyen de fixation adapté connu de l'homme du métier à la conduite d'amenée d'air 30.

Ainsi, dans une variante de réalisation, l'ensemble câble chauffant 80 / plaque 90 est monté de façon rotative dans la conduite d'amenée d'air 30.

Plus précisément, le câble chauffant 80 est monté sur un axe rotatif 85 fixé à la conduite d'amenée d'air 30.

Un tel montage du câble chauffant 80 permet de définir le degré d'obturation de la conduite 30 et de maitriser le transfert de la chaleur à l'air entre les deux plaques 90 qui est dépendant de la vitesse de déplacement de l'air circulant dans la conduite 30.

Comme illustré sur la figure 8 plus particulièrement, un tel ensemble rotatif câble chauffant 80 / plaque 90 peut être mis en place dans une installation de ventilation de bâtiments pour animaux et, plus particulièrement, de bâtiments avicoles de couveuses pour canards, poussins, perdreaux, cailles, etc.

Un tel ensemble pourra ainsi être associé à un système de ventilation 100 de façon à ventiler dans le volume du bâtiment l'air prélevé à l'extérieur et préchauffé le long de la conduite 30.

Dans un exemple non limitatif, chaque ensemble câble chauffant 80 / plaques 90 est placé entre deux hélices 101 à travers lesquelles est dirigé un air pulsé, de préférence.

Dans d'autres variantes de réalisation, plusieurs ensembles câble chauffant 80 / plaques 90 peuvent être agencés le long de la conduite d'amenée d'air 30 raccordés en série ou non et/ou mis en place dans des conduites équipées d'une hélice 101.

Par ailleurs, des moyens de fixation 110 sur la circonférence extérieure de la conduite d'amenée d'air 30 de l'installation 10 sont prévus, ceci afin de fixer et suspendre ladite conduite 30 au plafond des bâtiments susmentionnés.

Une variante de réalisation peut prévoir, également, des moyens de filtrage 120 ménagés sur le chemin de circulation de l'air chauffé placés avant et/ou après l'élément de chauffage 80.

Par ailleurs, comme illustré dans le mode de réalisation de la figure 8, le flux d'air chauffé circulant dans la conduite d'amenée d'air 30 est orienté de façon horizontale.

Dans une variante de réalisation d'une telle installation, la même structure que la figure 8 peut être orientée vers le bas en direction du sol du bâtiment, ceci afin de diriger le flux d'air chauffé pulsé vers les animaux pour les réchauffer.

Dans un exemple non limitatif, la structure est placée à une distance du sol de l'ordre de 1 à 1.5 m.

Par ailleurs, un dispositif d'orientation de l'air chaud pulsé sorti d'une hélice du système de ventilation peut également être prévu.

Dans un exemple non limitatif, un tel dispositif comprend un cône assurant l'orientation de l'air chaud pulsé vers les animaux.

La face du cône dirigée en regard du sol est ainsi munie d'un ou plusieurs orientateurs pour diriger l'air chaud pulsé, lesdits orientateurs pouvant être placés sur des cercles de montage concentriques.

Selon l'invention, les entrées d'air de telles ventilations mécaniquement contrôlées, destinées à canaliser l'air provenant de l'extérieur pour le ventiler et le distribuer dans un bâtiment, peuvent comprendre une ou plusieurs conduites de prélèvement d'air équipées d'un ou plusieurs éléments de chauffage similaires à ceux décrits, précédemment, en relation avec la conduite d'amenée d'air 30 du puits canadien 20 de l'installation de ventilation 1 de la figure 1 ou celle de la conduite d'amenée d'air de l'installation des figures 6 à 8.

L'homme de l'Art appréciera, par rapport aux installations de ventilation connues, une installation de ventilation 10 simple à mettre en oeuvre tout en étant plus efficace en termes de performance énergétique dans la mesure où elle offre la possibilité de s'affranchir de tout chauffage d'appoint à l'intérieur d'un bâtiment tout en atteignant des températures de confort dans le bâtiment à moindre cout énergétique.

Bien évidemment, l'invention ne se limite pas aux seules formes de réalisation de l'installation décrite ci-dessus à titre d'exemple, mais elle embrasse au contraire toutes les variantes possibles.

## Revendications

1. Dispositif de ventilation (10) d'un bâtiment (1) comprenant un système de prélèvement d'air destiné à être ventilé à l'intérieur dudit bâtiment (1), ledit système comprenant au moins une conduite d'amenée d'air (30) ventilé vers ledit bâtiment (1) **caractérisé en ce que** ladite conduite d'amenée d'air (30) ventilé est équipée d'au moins un élément de chauffage (50) de l'air circulant au sein de ladite conduite (30), ledit élément de chauffage étant un ruban chauffant, une cartouche chauffante ou un câble chauffant.

2. Dispositif de ventilation selon la revendication 1 **caractérisé en ce que** l'élément de chauffage (50) est placé à l'intérieur et/ou à l'extérieur de la conduite d'amenée d'air ventilé (30).

3. Dispositif de ventilation selon l'une des revendications 1 à 2 **caractérisé en ce que** le ruban de chauffage (50) comprend au moins une ou plusieurs pistes électriquement conductrices (53) déposées sur au moins une couche de protection (51).

4. Dispositif de ventilation selon l'une des revendications 1 à 3 **caractérisé en ce que** le ruban de chauffage (50) est souple, semi rigide ou rigide.

5. Dispositif de ventilation selon l'une des revendications 1 à 4 **caractérisé en ce que** le ruban de chauffage (50) est conformé sous forme de spirale selon l'axe de la conduite d'amenée d'air ventilé (30).

6. Dispositif de ventilation l'une des revendications 1 à 4 **caractérisé en ce que** le ruban de chauffage (50) est conformé sous forme d'une plaque (55) disposée contre la conduite d'amenée d'air ventilé (30).

7. Dispositif de ventilation l'une des revendications 1 à 4 **caractérisé en ce que** le ruban de chauffage (50) est conformé sous forme d'une plaque disposée selon la section de la conduite d'amenée d'air (30) ventilé et percée de passages traversant pour le passage de l'air circulant au sein de ladite conduite (30).

8. Dispositif de ventilation selon la revendication 1 **caractérisé en ce que** le câble chauffant (80) est fixé entre deux plaques (90) adaptées pour accumuler de la chaleur.

9. Dispositif de ventilation selon la revendication 8 **caractérisé en ce que** l'ensemble câble chauffant (80) / plaque (90) est monté de façon rotative dans la conduite d'amenée d'air (30).

10. Dispositif de ventilation selon l'une des revendications 1 à 9 **caractérisé en ce que** l'élément de chauffage (50) est amovible.

11. Dispositif de ventilation selon l'une des revendications 1 à 10 **caractérisé en ce qu'**il comprend un accumulateur et/ou une source d'énergie renouvelable pour alimenter l'élément de chauffage (50) en énergie électrique.

12. Dispositif de ventilation selon la revendication 1 **caractérisé en ce que** la conduite d'amenée d'air ventilé (30) appartient à une ventilation mécaniquement contrôlée à simple ou double flux ou à un échangeur géothermique (20) ou à une ventilation mécaniquement contrôlée couplée à un échangeur géothermique (20).

13. Dispositif de ventilation selon la revendication 1 **caractérisé en ce que** la conduite d'amenée d'air ventilé (30) appartient à un bâtiment avicole.

14. Dispositif de ventilation selon la revendication 12 **caractérisé en ce que** l'échangeur géothermique (20) est un puits canadien.
